# EUROPEAN PATENT APPLICATION

(11) **EP 4 113 422 A2**
(43) Date of publication of application: **04.01.2023**
(21) Application number: 22201249.4
(22) Date of filing: 13.10.2022
(51) Int. Cl.: G06Q 40/08, G06Q 30/00, G06F 40/20, G06V 10/00, G06N 3/02

(54) **METHOD AND APPARATUS FOR REMOTE DAMAGE ASSESSMENT OF A VEHICLE, ELECTRONIC DEVICE AND MEDIUM**

(30) Priority: 08.12.2021 CN 202111492460
(71) Applicant: Beijing Baidu Netcom Science Technology Co., Ltd., Beijing 100085 (CN)
(72) Inventor: FENG, Bohao, BEIJING, 100085 (CN)
(74) Representative: von Tietzen und Hennig, Nikolaus

(57) **Abstract**

The present disclosure provides a method for remote damage assessment of a vehicle, and relates to the technical field of artificial intelligence, in particular to the technical field of image and text recognition. An implementation solution is: performing data collection on a target vehicle to determine damage information of the target vehicle; obtaining call content of an insurance claiming call for the target vehicle, and extracting accident-related information from the call content, wherein the accident-related information includes named entities in the call content and a relationship between the named entities; and determining a first fraud probability corresponding to the target vehicle at least based on the damage information and the accident-related information.

## Description

### TECHNICAL FIELD

The present disclosure relates to the technical field of artificial intelligence, in particular to the technical field of image and text recognition, and specifically relates to a method and apparatus for remote damage assessment of a vehicle, an electronic device, a computer readable storage medium and a computer program product.

### BACKGROUND ART

Artificial intelligence is a subject to study how to make computers simulate certain thinking processes and intelligent behaviors (such as learning, reasoning, thinking, planning, etc.) of people, and has both a hardware-level technology and a software-level technology. Artificial intelligence hardware technologies generally include technologies such as sensors, dedicated artificial intelligence chips, cloud computing, distributed storage, and big data processing. Artificial intelligence software technologies mainly include a computer vision technology, a speech recognition technology, a natural language processing technology, machine learning/deep learning, a big data processing technology, a knowledge mapping technology and other major directions.

Investigation and damage determination in claim settlement work of motor vehicle insurance is to investigate and inspect the loss, describe and record the extent of the loss objectively and professionally, and judge the possibility of repair. For those that may be repaired, the mode and cost of repair should be determined.

Methods described in this section are not necessarily those previously envisaged or adopted. Unless otherwise specified, it should not be assumed that any method described in this section is considered the prior art only because it is included in this section. Similarly, unless otherwise specified, the issues raised in this section should not be considered to have been universally acknowledged in any prior art.

### SUMMARY OF THE INVENTION

The present disclosure provides a method and apparatus for remote damage assessment of a vehicle, an electronic device, a computer readable storage medium and a computer program product.

According to one aspect of the present disclosure, a method for remote damage assessment of a vehicle is provided and includes: performing data collection on a target vehicle to determine damage information of the target vehicle; obtaining call content of an insurance claiming call for the target vehicle, and extracting accident-related information from the call content, wherein the accident-related information includes named entities in the call content and a relationship between the named entities; and determining a first fraud probability corresponding to the target vehicle at least based on the damage information and the accident-related information.

According to another aspect of the present disclosure, an apparatus for remote damage assessment of a vehicle is provided and includes: a collecting module, configured to perform data collection on a target vehicle to determine damage information of the target vehicle; an obtaining module, configured to obtain call content of an insurance claiming call for the target vehicle, and extract accident-related information from the call content, wherein the accident-related information includes named entities in the call content and a relationship between the named entities; and a first determining module, configured to determine a first fraud probability corresponding to the target vehicle at least based on the damage information and the accident-related information.

According to another aspect of the present disclosure, an electronic device is provided and includes: at least one processor; and a memory in communication connection with the at least one processor. The memory stores instructions executed by the at least one processor, and the instructions are executed by the at least one processor such that the at least one processor can execute a method for remote damage assessment of a vehicle.

According to another aspect of the present disclosure, a non-transitory computer readable storage medium storing computer instructions is provided. The computer instructions are configured to cause a computer to perform a method for remote damage assessment of a vehicle.

According to another aspect of the present disclosure, a computer program product is provided and includes a computer program. The computer program, when executed by a processor, implements a method for remote damage assessment of a vehicle.

According to one or more embodiments of the present disclosure, the damage information of the vehicle may be determined through the data collected remotely, and be compared with a user's description in the call content, so as to judge the fraud probability, thereby reducing human resources for on-site investigation and reducing the probability of remote damage assessment fraud cases.

It should be understood that the content described in this part is not intended to identify key or important features of the embodiments of the present disclosure, nor is it used to limit the scope of the present disclosure. Other features of the present disclosure will be easily understood by the following description.

### BRIEF DESCRIPTION OF THE DRAWINGS

The accompanying drawings exemplarily illustrate embodiments and form part of the description, which, together with the textual description of the description, is used to explain exemplary implementations of the embodiments. The illustrated embodiments are for illustrative purposes only and do not limit the scope of the claims. In all the drawings, the same reference numerals refer to similar but not necessarily identical elements.
Fig. 1 shows a flow diagram of a method for remote damage assessment of a vehicle according to an embodiment of the present disclosure.
Fig. 2 shows a flow diagram of a method for determining damage information of a target vehicle according to an embodiment of the present disclosure.
Fig. 3 shows a flow diagram of a method for determining a first fraud probability corresponding to a target vehicle according to an embodiment of the present disclosure.
Fig. 4 shows a structural block diagram of an apparatus for remote damage assessment of a vehicle according to an embodiment of the present disclosure.
Fig. 5 shows a structural block diagram of a collecting module for determining damage information of a target vehicle according to an embodiment of the present disclosure.
Fig. 6 shows a structural block diagram of a first determining module for determining a first fraud probability corresponding to a target vehicle according to an embodiment of the present disclosure.
Fig. 7 shows a structural block diagram of an exemplary electronic device capable of being used to implement an embodiment of the present disclosure.

### DETAILED DESCRIPTION OF THE EMBODIMENTS

The exemplary embodiments of the present disclosure are described below in combination with the accompanying drawings, including various details of the embodiments of the present disclosure to facilitate understanding, which should be considered only exemplary. Therefore, those of ordinary skill in the art should recognize that various changes and modifications may be made to the embodiments described herein without departing from the scope of the present disclosure. Similarly, for clarity and conciseness, the description of well-known functions and structures is omitted from the following description.

In the present disclosure, unless otherwise specified, the terms "first", "second" and the like are used to describe various elements and are not intended to limit the positional relationship, temporal relationship or importance relationship of these elements. These terms are only used to distinguish one element from another element. In some examples, a first element and a second element may point to the same instance of the element, and in some cases, based on the context description, they can also refer to different instances.

The terms used in the description of the various examples in the present disclosure are only for the purpose of describing specific examples and are not intended to be limiting. Unless the context clearly indicates otherwise, if the number of elements is not specifically limited, the element may be one or more. In addition, the term "and/or" as used in the present disclosure covers any and all possible combinations of the listed items.

In the related art, after a vehicle accident occurs, a full-time surveyor is required to conduct a vehicle damage assessment survey at an accident site. However, due to the high frequency of accidents and scattered locations, when an on-site survey task occurs, it may not be possible to determine statuses of surveyors closest to the scene and deploy them in the shortest time, which is bound to greatly increase the waiting time of a customer on site. On the other hand, there have been many fraudulent behaviors in vehicle insurance claims. For example, there are many "old injuries" in a damaged part of the vehicle, which overlap with the scratches caused by the current accident, but the owner of the vehicle claims that there has been no accident recently, exaggerating the loss, and the surveyors on the scene are unable to judge the fraudulent behaviors because of failure to collect complete data of the accident vehicle in a short time.

In order to solve the above problems, the present disclosure judges a fraud probability by determining damage information of the vehicle through data collected remotely, and comparing the damage information with a user's description in call content. Therefore, human resources for on-site investigation are reduced, and the probability of remote damage assessment fraud cases can be reduced.

It should be noted that, in the technical solution of the present disclosure, involved collection, storage, use, processing, transmission, providing, disclosure and others of personal information of users comply with the provisions of relevant laws and regulations, and do not violate public order and good customs.

The embodiments of the present disclosure will be described in detail below in combination with the accompanying drawings.

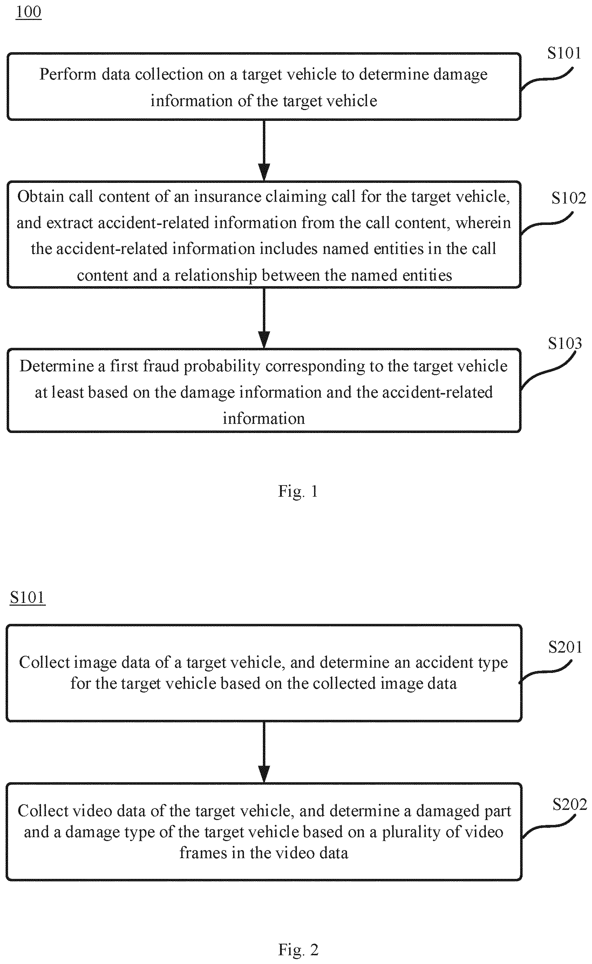

Fig. 1 shows a flow diagram of a method for remote damage assessment of a vehicle according to an embodiment of the present disclosure. As shown in Fig. 1, the method 100 for remote damage assessment of the vehicle includes: step S101, data collection is performed on a target vehicle to determine damage information of the target vehicle; step S102, call content of an insurance claiming call for the target vehicle is obtained, and accident-related information is extracted from the call content, wherein the accident-related information includes named entities in the call content and a relationship between the named entities; and step S103, a first fraud probability corresponding to the target vehicle is determined at least based on the damage information and the accident-related information.

Therefore, the damage information of the vehicle is determined by remotely collected accident scene data of the target vehicle, and is compared with a user's description in the insurance claiming call to judge whether the collected accident scene data and the user's description are inconsistent. The accident-related information including the named entities and the relationship between the named entities is extracted from the call content, irrelevant information and redundant information in the call content are excluded, the authenticity of the content described by the user may be judged more quickly, and the fraud probability is then judged based on this so as to determine whether the user is fraudulent in describing the damage information of the vehicle. Therefore, human resources for on-site investigation are reduced, and the probability of remote damage assessment fraud cases can be reduced.

According to some embodiments, the named entities are concrete instances of a certain concept and are main components of constructing a sentence. For example, "vehicle brand" is a concept, correspondingly, "brand A" and "brand B" are two named entities under this concept. Exemplarily, when the call content is "just now my brand A vehicle collided with a brand B vehicle", two named entities "brand A" and "brand B" and the relationship "collided" between the two named entities in the sentence may be extracted to obtain the accident-related information of "brand A- brand B-collided", thereby excluding the redundant information in the call content to improve the subsequent judgment efficiency of the authenticity of the call content. Fig. 2 shows a flow diagram of a method for determining damage information of a target vehicle according to an embodiment of the present disclosure. As shown in Fig. 2, the method S101 of determining the damage information of the target vehicle includes: step S201, image data of the target vehicle are collected, and an accident type for the target vehicle is determined based on the collected image data; and/or step S202, video data of the target vehicle are collected, and a damaged part and a damage type of the target vehicle are determined based on a plurality of video frames in the video data.

Exemplarily, the image data and the video data may be captured by the user at the accident scene, so as to determine the damage information of the target vehicle. Specifically, an image classification model may be used to determine the accident type for the target vehicle based on the collected image data, and the accident type may include, for example, rear-end collision, collision between people and vehicles, accident at curves, lane change accident, and the like. Preprocessing operations such as extracting a plurality of key frames may be performed on the collected video data, and the damage information of the target vehicle may be obtained based on image information of the plurality of extracted key frames and changes between the frames.

In one example, a Yolo-v5 algorithm may be used to detect an overall damaged part of the target vehicle in the plurality of key frames, an image semantic segmentation model is used to further determine a more specific damaged part and damage type of the target vehicle, and the damage type may include, for example, scratches, dents, and tears. Specifically, the image semantic segmentation model may include a Deeplab V3+ model and an Img2txt model. After the Deeplab V3+ model is pre-trained with samples in an early stage, the damaged part and damage type of the target vehicle in the plurality of key frames may be identified, and then the Img2txt model is used to convert the damage information in an image output by Deeplab V3+ into text information to obtain the damage information of the target vehicle. Therefore, by combining the Yolo-v5 algorithm and the image semantic segmentation model, the damaged part and damage type of the target vehicle may be located more quickly and finely.

It can be understood that after the target vehicle has an accident, the user will report the accident to an insurance company by phone. Therefore, the accident-related information of the call content of the insurance claiming call may be extracted and compared with the above damage information to more quickly judge whether the user has misreported or exaggerated losses.

According to some embodiments, in step S102, a BERT model may be combined with a conditional random field (CRF) model to extract the named entities in the call content, wherein the BERT model may obtain a starting position and an end position of the named entities, and the CRF model is added to an output layer of the BERT model, so that the model considers the correlation between class labels, thereby improving the accuracy of extraction of the named entities. After a series of discrete named entities are extracted, a Piece-Wise-CNN (PCNN) model may be used to extract the relationship between the named entities from the call content, and the entities are linked through the relationship to form a networked knowledge structure, so as to obtain semantic information.

In one example, the step of extracting the relationship between the named entities by using the PCNN model includes: data are preprocessed, position encoding is performed on text data, and a distance between each word in each sentence in the call content and the named entities is encoded; the sentences are segmented, and each sentence in the call content is segmented according to the named entities; after a location feature and a text feature are spliced, features of the data are extracted through a CNN model respectively; and the extracted features pass through a Softmax function to complete classification of the relationship. Through the above process, key information of the call content may be extracted, the redundant information may be removed, and the extraction of core points can be completed.

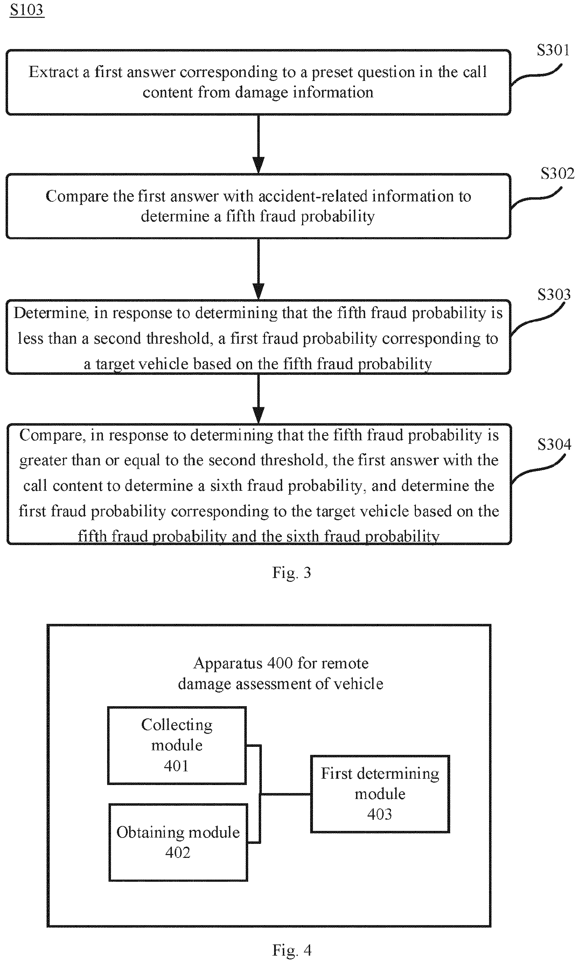

Fig. 3 shows a flow diagram of a method for determining a first fraud probability corresponding to a target vehicle according to an embodiment of the present disclosure. As shown in Fig. 3, the method S103 for determining the first fraud probability corresponding to the target vehicle includes: step S301, a first answer corresponding to a preset question in the call content is extracted from the damage information; step S302, the first answer is compared with the accident-related information to determine a fifth fraud probability; and step S303, in response to determining that the fifth fraud probability is smaller than a second threshold, the first fraud probability corresponding to the target vehicle is determined based on the fifth fraud probability; or step S304, in response to determining that the fifth fraud probability is greater than or equal to the second threshold, the first answer is compared with the call content to determine a sixth fraud probability, and the first fraud probability corresponding to the target vehicle is determined based on the fifth fraud probability and the sixth fraud probability.

It can be understood that when talking with the user claiming the insurance, a worker will ask a preset series of questions, such as a model of the target vehicle, the specific damaged part, damage situation and the accident site, etc., so as to understand the situation at the accident scene.

According to some embodiments, a retrospective reader for machine reading comprehension (RRMRC) model may be used to extract answers corresponding to the above preset questions from the damage information obtained through the collected image data or video data, and compare the answers with user's answers in the accident-related information so as to judge whether there is a conflict or contradiction between the extracted answers and the user's answers to determine the fifth fraud probability. Since the accident-related information is the key information extracted from the call content to exclude the redundant information, a speed of the above judgment is improved. When the fifth fraud probability is smaller than the second threshold, it indicates that the user corresponding to the target vehicle has a small possibility of fraud in describing the damage information of the target vehicle, so the fifth fraud probability may be directly used as the first fraud probability corresponding to the target vehicle and used for the calculation of a composite fraud probability. When the fifth fraud probability is greater than the second threshold, it indicates that the user corresponding to the target vehicle has a large possibility of fraud in describing the damage information of the target vehicle, it is necessary to compare the first answer with the complete call content to more comprehensively and accurately determine whether the user has misreported or exaggerated in the process of describing the damage information of the target vehicle, then the sixth fraud probability is determined, and based on the fifth fraud probability and the sixth fraud probability, the first fraud probability corresponding to the target vehicle is determined to be used for the calculation of the composite fraud probability. Such a calculation mode enables a smaller amount of calculation data to improve the calculation speed when the fraud probability is smaller than the threshold, and performs more comprehensive comparison to make a calculation result more accurate when the fraud probability is greater than the threshold.

Exemplarily, the first answer corresponding to the above-mentioned preset question and extracted from the damage information may be, for example, "brand B vehicle, front and rear pillars are pierced, and the depressed and deformed part of the pillars reaches 20% of the pillars", and the call content of the insurance claiming call is: "Q: Excuse me, what brand of vehicle is yours? A: Mine is a brand B vehicle. Q: What's the problem? A: There is a vehicle accident today and pillars are broken after crashed." The key information of the call content is: brand B vehicle -vehicle accident, and brand B vehicle-pillars are broken after crashed. When the preset question is "What's the problem?", the PRMRC model may extract the corresponding answer from the damage information as "front and rear pillars are pierced", and use a text similarity model to compare based on the above three aspects of information to determine the fifth fraud probability or the sixth fraud probability.

According to some embodiments, the method for remote damage assessment of the vehicle further includes: the composite fraud probability configured to indicate whether an accident involves fraud is determined based on the first fraud probability. It can be understood that the first fraud probability may be used to quantify the probability that the user has fraud in describing the damage information of the vehicle, and this probability may be used as an aspect of fraud to confirm the composite fraud probability that the user has a fraudulent behavior.

According to some embodiments, determining the composite fraud probability configured to indicate whether the accident involves fraud based on the first fraud probability includes: the composite fraud probability is determined based on the first fraud probability and at least one of: a second fraud probability determined based on geographic location information of the target vehicle during insurance claiming; a third fraud probability determined based on user information corresponding to the target vehicle and the call content; and a fourth fraud probability determined based on a character map of a caller corresponding to the insurance claiming call.

According to actual needs, the calculation of the composite fraud probability may be based on the calculation of the fraud probabilities in a plurality of aspects. In addition to the above description of the damage information of the target vehicle, it may also be considered whether the user has a fraudulent behavior in aspects of geographic location information, user information, and the like.

According to some embodiments, the third fraud probability may indicate whether the user corresponding to the target vehicle has fraud in user information during the call. The user information is obtained from a database, basic information of the user is extracted from the call content, and then the two are compared to judge whether the user has a fraudulent behavior. For example, in the call content, the user claims to be 21 years old, and the birth time recorded in the database is 2014. Therefore, the third fraud probability of the information may be obtained.

According to some embodiments, the fourth fraud probability indicates a gang fraud probability corresponding to the target vehicle. In some cases of fraud, the same vehicle was involved in each accident, and it was an irresponsible vehicle that was rear-ended. The same person was present in a plurality of photos of the insurance company's damage assessment, the fraud gang was headed by that person, many members apply for insurance to the insurance company, and the roles of a policy holder, a reporter, an insured, a driver and the like are alternately replaced. It can be seen that in vehicle insurance, the detection of the fraud gang is extremely important. A community detection algorithm infomap may be used to quickly and effectively complete the detection of the crime gang based on the character map of the caller corresponding to the insurance claiming call, and output the fourth fraud probability that the caller is in the fraud gang.

According to some embodiments, under the condition that the composite fraud probability is determined at least based on the second fraud probability, the second fraud probability is determined in a following manner: a seventh fraud probability is determined based on the geographic location information and a preset risk region; location information in the call content is extracted and compared with the geographic location information to determine an eighth fraud probability; and the second fraud probability corresponding to the target vehicle is determined based on the seventh fraud probability and the eighth fraud probability.

The second fraud probability of the geographic location information corresponding to the target vehicle may be calculated based on two aspects: one is judging whether the target vehicle is in the risk region and obtaining the seventh fraud probability representing the probability that the target vehicle may be in the risk region, wherein the risk region refers to a high-probability region where fraud occurs based on historical data; and second is determining the eighth fraud probability through comparing the location information in the call content with the geographic location information of the target vehicle, wherein the farther the distance between the location information in the call content and the geographic location information of the target vehicle is, the greater the eighth fraud probability is.

According to some embodiments, the method further includes: in response to determining that the composite fraud probability is smaller than a first threshold, a maintenance mode for the target vehicle is determined based on the damage information.

When the composite fraud probability is smaller than the first threshold, the possibility of fraud in the target vehicle is low, and a process of assessing the damage of the target vehicle should be continued. The damage assessment process may include three parts: information query, maintenance mode classification, and maintenance price query of damaged components.

For information query, when the vehicle has an accident, the customer makes a vehicle insurance report. Vehicle insurance report information includes basic information of the vehicle, a cause of the accident, a location of the accident and the like. The basic information of the vehicle includes a license plate number and a frame number of the accident vehicle. According to the frame number provided by the user or the frame number obtained through OCR identification, an information base may be retrieved to obtain detailed information of the target vehicle. The detailed information of the target vehicle includes information such as a vehicle model and vehicle series, purchase time, and a vehicle age. For maintenance mode classification, a text classification model may be used to judge whether to repair or replace components based on the damage information and the detailed information of the target vehicle. If a classification result is repair, a repair mode (such as sheet metal, painting, etc.) will also be given. For example, when the damage information is "front and rear pillars are pierced, and the depressed and deformed part of the pillars reaches 20% of the pillars", the text classification model will obtain a damage handling suggestion as "replace". For maintenance price query of the damaged components, according to the detailed information of the target vehicle and the damaged components, information of corresponding accessories saved in the information database may be inquired, and the maintenance price of the damaged vehicle may be obtained thereby.

Correspondingly, when the composite fraud probability is greater than the first threshold, which indicates that the target vehicle has a high possibility of fraud and the reporter is suspected of fraud, a system will display early warning information, and the insurance company and surveyors will pay special attention to the reporter. A speech synthesis technology may be used to call back to the reporter, tell him the doubts of the case, and explain the legal consequences of deliberately creating a false accident to cheat compensation. Follow-up treatment is performed according to the response of the reporter.

According to another aspect of the present disclosure, an apparatus for remote damage assessment of a vehicle is provided. As shown in Fig.4, the apparatus 400 for remote damage assessment of the vehicle includes: a collecting module 401, configured to perform data collection on a target vehicle to determine damage information of the target vehicle; an obtaining module 402, configured to obtain call content of an insurance claiming call for the target vehicle, and extract accident-related information from the call content, wherein the accident-related information includes named entities in the call content and a relationship between the named entities; and a first determining module 403, configured to determine a first fraud probability corresponding to the target vehicle at least based on the damage information and the accident-related information.

The operations of the modules 401-403 of the apparatus 400 for remote damage assessment of the vehicle are similar to the operations of steps S101-S103 described above, and are not repeated here.

Therefore, the damage information of the vehicle is determined by accident scene data, remotely collected by the collecting module 401, of the target vehicle, and is compared with a user's description in the insurance claiming call to judge whether the collected accident scene data and the user's description are inconsistent. The accident-related information including the named entities and the relationship between the named entities is extracted from the call content by the obtaining module 402, irrelevant information and redundant information in the call content are excluded, the authenticity of the content described by the user may be judged more quickly by the first determining module 403, and the fraud probability is judged so as to determine whether the user is fraudulent in describing the damage information of the vehicle. Therefore, human resources for on-site investigation are reduced, and the probability of remote damage assessment fraud cases can be reduced.

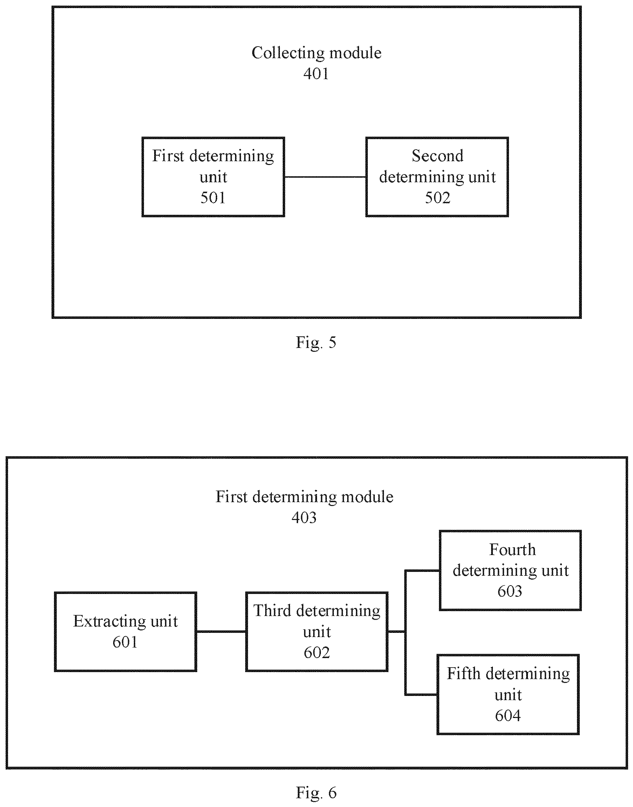

Fig. 5 shows a structural block diagram of a collecting module for determining damage information of a target vehicle according to an embodiment of the present disclosure. As shown in Fig. 5, the collecting module 401 includes: a first determining unit 501, configured to collect image data of the target vehicle, and determine an accident type for the target vehicle based on the collected image data; and/or, a second determining unit 502, configured to collect video data of the target vehicle, and determine a damaged part and a damage type of the target vehicle based on a plurality of video frames in the video data.

Exemplarily, the image data and the video data may be captured by the user through the first determining unit 501 and the second determining unit 502 at the accident scene, so as to determine the damage information of the target vehicle. Specifically, the first determining unit 501 may use an image classification model to determine the accident type for the target vehicle based on the collected image data, and the accident type may include, for example, rear-end collision, collision between people and vehicles, accident at curves, lane change accident, and the like. The second determining unit 502 may perform preprocessing operations such as extracting a plurality of key frames from the collected video data, and obtain the damage information of the target vehicle based on image information of the plurality of extracted key frames and changes between the frames.

In one example, the second determining unit 502 may use a Yolo-v5 algorithm to detect an overall damaged part of the target vehicle in the plurality of key frames, and use an image semantic segmentation model to further determine a more specific damaged part and damage type of the target vehicle, and the damage type may include, for example, scratches, dents, and tears. Specifically, the image semantic segmentation model may include a Deeplab V3+ model and an Img2txt model. After the Deeplab V3+ model is pre-trained with samples in an early stage, the damaged part and damage type of the target vehicle in the plurality of key frames may be identified, and then the Img2txt model is used to convert the damage information in an image output by Deeplab V3+ into text information to obtain the damage information of the target vehicle. Therefore, by combining the Yolo-v5 algorithm and the image semantic segmentation model, the damaged part and damage type of the target vehicle may be located more quickly and finely.

It can be understood that after the target vehicle has an accident, the user will report the accident to an insurance company by phone. Therefore, the obtaining module 402 may extract the accident-related information of the call content of the insurance claiming call and compare it with the above damage information to more quickly judge whether the user has misreported or exaggerated losses.

According to some embodiments, the obtaining module 402 may combine a BERT model with a conditional random field (CRF) model to extract the named entities in the call content, wherein the BERT model may obtain a starting position and an end position of the named entities, and the CRF model is added to an output layer of the BERT model, so that the model considers the correlation between class labels, thereby improving the accuracy of extraction of the named entities. After a series of discrete named entities are extracted, a Piece-Wise-CNN (PCNN) model may be used to extract the relationship between the named entities from the call content, and the entities are linked through the relationship to form a networked knowledge structure, so as to obtain semantic information.

In one example, the step of extracting the relationship between the named entities by using the PCNN model through the obtaining module 402 includes: data are preprocessed, position encoding is performed on text data, and a distance between each word in each sentence in the call content and the named entities is encoded; the sentences are segmented, and each sentence in the call content is segmented according to the named entities; after a location feature and a text feature are spliced, features of the data are extracted through a CNN model respectively; and the extracted features pass through a Softmax function to complete classification of the relationship. Through the above process, key information of the call content may be extracted, the redundant information may be removed, and the extraction of core points can be completed.

Fig. 6 shows a structural block diagram of a first determining module for determining a first fraud probability corresponding to a target vehicle according to an embodiment of the present disclosure. As shown in Fig. 6, the first determining module 403 includes: an extracting unit 601, configured to extract a first answer corresponding to a preset question in the call content from the damage information; a third determining unit 602, configured to compare the first answer with the accident-related information to determine a fifth fraud probability; and a fourth determining unit 603, configured to determine, in response to determining that the fifth fraud probability is smaller than a second threshold, the first fraud probability corresponding to the target vehicle based on the fifth fraud probability; or, a fifth determining unit 604, configured to compare, in response to determining that the fifth fraud probability is greater than or equal to the second threshold, the first answer with the call content to determine a sixth fraud probability, and determine the first fraud probability corresponding to the target vehicle based on the fifth fraud probability and the sixth fraud probability.

According to some embodiments, the extracting unit 601 may use a retrospective reader for machine reading comprehension (RRMRC) model to extract answers corresponding to the above preset questions from damage information obtained through the collected image data or video data, and the third determining unit 602 compares the answers with user's answers in the accident-related information so as to judge whether there is a conflict or contradiction between the extracted answers and the user's answers to determine the fifth fraud probability. Since the accident-related information is the key information extracted from the call content to exclude the redundant information, a speed of the above judgment is improved. When the fifth fraud probability is smaller than the second threshold, it indicates that the user corresponding to the target vehicle has a small possibility of fraud in describing the damage information of the target vehicle, so the fifth fraud probability may be directly used as the first fraud probability corresponding to the target vehicle and used for the calculation of a composite fraud probability. When the fifth fraud probability is greater than the second threshold, it indicates that the user corresponding to the target vehicle has a large possibility of fraud in describing the damage information of the target vehicle, it is necessary to compare the first answer with the complete call content to more comprehensively and accurately determine whether the user has misreported or exaggerated in the process of describing the damage information of the target vehicle, then the sixth fraud probability is determined, and based on the fifth fraud probability and the sixth fraud probability, the first fraud probability corresponding to the target vehicle is determined to be used for calculation of the composite fraud probability. Such a calculation mode enables a smaller amount of calculation data to improve the calculation speed when the fraud probability is smaller than the threshold, and performs more comprehensive comparison to make a calculation result more accurate when the fraud probability is greater than the threshold.

Exemplarily, the first answer corresponding to the above-mentioned preset question and extracted from the damage information by the extracting unit 601 may be, for example, "brand B vehicle, front and rear pillars are pierced, and the depressed and deformed part of the pillars reaches 20% of the pillars", and the call content of the insurance claiming call is: "Q: Excuse me, what brand of vehicle is yours? A: Mine is a brand B vehicle. Q: What's the problem? A: There is a vehicle accident today and pillars are broken after crashed." The key information of the call content is: brand B vehicle- vehicle accident, and brand B vehicle -pillars are broken after crashed. When the preset question is "What's the problem?", the PRMRC model may extract the corresponding answer from the damage information as "front and rear pillars are pierced", and use a text similarity model to compare based on the above three aspects of information to determine the fifth fraud probability or the sixth fraud probability.

According to some embodiments, the apparatus for remote damage assessment of the vehicle further includes: a second determining module, configured to determine the composite fraud probability configured to indicate whether an accident involves fraud based on the first fraud probability. It can be understood that the first fraud probability may be used to quantify the probability that the user has fraud in describing the damage information of the vehicle, and this probability may be used as an aspect of fraud to confirm the composite fraud probability that the user has a fraudulent behavior.

According to some embodiments, the second determining module is further configured to: determine the composite fraud probability based on the first fraud probability and at least one of: a second fraud probability determined based on geographic location information of the target vehicle during insurance claiming; a third fraud probability determined based on user information corresponding to the target vehicle and the call content; and a fourth fraud probability determined based on a character map of a caller corresponding to the insurance claiming call.

According to actual needs, the calculation of the composite fraud probability may be based on the calculation of the fraud probabilities in a plurality of aspects. In addition to the above description of the damage information of the target vehicle, it may also be considered whether the user has a fraudulent behavior in aspects of geographic location information, user information, and the like.

According to some embodiments, the third fraud probability may indicate whether the user corresponding to the target vehicle has fraud in user information during the call. The user information is obtained from a database, basic information of the user is extracted from the call content, and then the two are compared to judge whether the user has a fraudulent behavior. For example, in the call content, the user claims to be 21 years old, and the birth time recorded in the database is 2014. Therefore, the third fraud probability of the information may be obtained.

According to some embodiments, the fourth fraud probability indicates a gang fraud probability corresponding to the target vehicle. In some cases of fraud, the same vehicle was involved in each accident, and it was an irresponsible vehicle that was rear-ended. The same person was present in a plurality of photos of the insurance company's damage assessment, the fraud gang was headed by that person, many members apply for insurance to the insurance company, and the roles of a policy holder, a reporter, an insured, a driver and the like are alternately replaced. It can be seen that in vehicle insurance, the detection of the fraud gang is extremely important. A community detection algorithm infomap may be used to quickly and effectively complete the detection of the crime gang based on the character map of the caller corresponding to the insurance claiming call, and output the fourth fraud probability that the caller is in the fraud gang.

According to some embodiments, under the condition that the second determining module is configured to determine the composite fraud probability at least based on the second fraud probability, the second determining module includes the following units to determine the second fraud probability: a sixth determining unit, configured to determine a seventh fraud probability based on the geographic location information and a preset risk region; a seventh determining unit, configured to extract location information in the call content and compare the location information in the call content with the geographic location information to determine an eighth fraud probability; and an eighth determining unit, configured to determine the second fraud probability corresponding to the target vehicle based on the seventh fraud probability and the eighth fraud probability.

The second fraud probability of the geographic location information corresponding to the target vehicle may be calculated based on two aspects: one is judging whether the target vehicle is in the risk region and obtaining the seventh fraud probability representing the probability that the target vehicle may be in the risk region, wherein the risk region refers to a high-probability region where fraud occurs based on historical data; and second is determining the eighth fraud probability through comparing the location information in the call content with the geographic location information of the target vehicle, wherein the farther the distance between the location information in the call content and the geographic location information of the target vehicle is, the greater the eighth fraud probability is.

According to some embodiments, the apparatus further includes: a third determining module, configured to determine, in response to determining that the composite fraud probability is smaller than a first threshold, a maintenance mode for the target vehicle based on the damage information.

According to some embodiments, the apparatus further includes: a storage module to record the captured image data, video data and the call content of the user. At the same time, a storage system contains a large amount of user information and vehicle information, which is used for damage assessment of the vehicle. The information base of the storage module consists of two parts, the first part is user information and insurance information, and the second part is vehicle information and a vehicle map. The first part includes identity information of the insured, the date of insurance purchase, the amount insured, the type of insurance, and the like. The second part is the vehicle information and the vehicle map. The vehicle information here corresponds to a frame number, including a vehicle age, mileage, displacement and other information. The central node of the vehicle map is the brand, the node that expands the brand outward is the vehicle model and vehicle series, and the node that extends the vehicle model and vehicle series to the outside is spare parts. The connection with the spare parts is the vehicle model for which the parts are applicable. Each node itself contains its own characteristics. For example, for the node Mercedes-Benz C200, its attribute values include a body length, displacement, an engine model, etc. If the node is an accessory, its attribute value is the accessory name, the accessory price, image data of the accessory, etc.

According to an embodiment of the present disclosure, an electronic device, a readable storage medium and a computer program product are further provided.

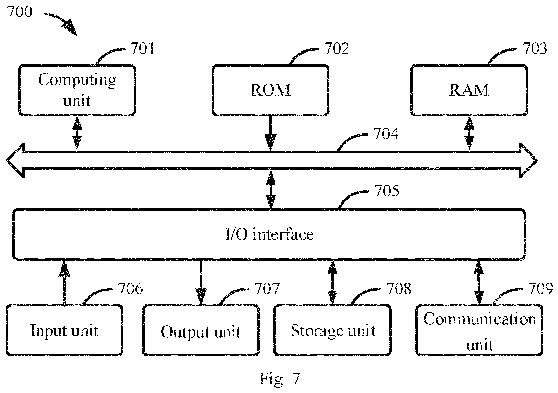

Referring to Fig. 7, a structural block diagram of an electronic device 700 that may serve as a server or a client of the present disclosure will now be described, and it is an example of a hardware device that may be applied to various aspects of the present disclosure. The electronic device is intended to represent various forms of digital electronic computer devices, such as, a laptop computer, a desktop computer, a workstation, a personal digital assistant, a server, a blade server, a mainframe computer, and other suitable computers. The electronic device may further represent various forms of mobile apparatuses, such as, personal digital processing, a cell phone, a smart phone, a wearable device and other similar computing apparatuses. The components shown herein, their connections and relationships, and their functions are merely used as examples, and are not intended to limit the implementations of the present disclosure described and/or required herein.

As shown in Fig. 7, the electronic device 700 includes a computing unit 701 that may perform various appropriate actions and processing according to computer programs stored in a read-only memory (ROM) 702 or computer programs loaded from a storage unit 708 into a random access memory (RAM) 703. In the RAM 703, various programs and data required for operations of the electronic device 700 may further be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, an output unit 707, a storage unit 708 and a communication unit 709. The input unit 706 may be any type of device capable of inputting information to the electronic device 700. The input unit 706 may receive input digital or character information and generate key signal input related to user settings and/or function control of the electronic device, and may include but not limited to a mouse, a keyboard, a touch screen, a trackpad, a trackball, a joystick, a microphone and/or a remote control. The output unit 707 may be any type of device capable of presenting information, and may include but not limited to a display, a speaker, a video/audio output terminal, a vibrator and/or a printer. The storage unit 708 may include but not limited to a magnetic disk and an optical disk. The communication unit 709 allows the electronic device 700 to exchange information/data with other devices through computer networks such as the Internet and/or various telecommunication networks, and may include but not limited to a modem, a network card, an infrared communication device, a wireless communication transceiver and/or a chipset, such as a Bluetooth TM device, an 802.11 device, a WiFi device, a WiMax device, a cellular communication device and/or the like.

The computing unit 701 may be various general-purpose and/or special-purpose processing components with processing and computing capabilities. Some examples of the computing unit 701 include but not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 701 performs various methods and processing described above, such as a method for remote damage assessment of the vehicle. For example, in some embodiments, the method for remote damage assessment of the vehicle may be implemented as a computer software program that is tangibly included in a machine-readable medium such as the storage unit 708. In some embodiments, part or all the computer programs may be loaded and/or installed onto the electronic device 700 via the ROM 702 and/or the communication unit 709. When the computer programs are loaded into the RAM 703 and executed by the computing unit 701, one or more steps of the method for remote damage assessment of the vehicle described above may be performed. Alternatively, in other embodiments, the computing unit 701 may be configured to perform the method for remote damage assessment of the vehicle in any other suitable manner (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally far away from each other and usually interact through a communication network. The relationship between the client and the server is generated by computer programs running on the corresponding computer and having a client-server relationship with each other. The server may be a cloud server, and may also be a server of a distributed system, or a server combined with a block chain.

It should be understood that the various forms of processes shown above may be used to reorder, add, or delete steps. For example, the steps recorded in the present disclosure may be performed in parallel, sequentially or in different orders, as long as the desired results of the technical solution disclosed by the present disclosure can be achieved, which is not limited herein.

Although the embodiments or examples of the present disclosure have been described with reference to the accompanying drawings, it should be understood that the above methods, systems and devices are only exemplary embodiments or examples, and the scope of the present invention is not limited by these embodiments or examples, but only by the authorized claims and their equivalent scope. Various elements in the embodiments or examples may be omitted or replaced by their equivalent elements. In addition, the steps may be performed in an order different from that described in the present disclosure. Further, various elements in the embodiments or examples may be combined in various ways. It is important that as technology evolves, many of the elements described herein may be replaced by equivalent elements that appear after the present disclosure.

## Claims

1. A method for remote damage assessment of a vehicle, comprising:
performing (S101) data collection on a target vehicle to determine damage information of the target vehicle;
obtaining (S102) call content of an insurance claiming call for the target vehicle, and extracting accident-related information from the call content, wherein the accident-related information comprises named entities in the call content and a relationship between the named entities; and
determining (S103) a first fraud probability corresponding to the target vehicle at least based on the damage information and the accident-related information.

2. The method according to claim 1, further comprising:
determining a composite fraud probability configured to indicate whether an accident involves fraud based on the first fraud probability.

3. The method according to claim 2, wherein determining the composite fraud probability based on the first fraud probability comprises:
determining the composite fraud probability based on the first fraud probability and at least one of:
a second fraud probability determined based on geographic location information of the target vehicle during insurance claiming;
a third fraud probability determined based on user information corresponding to the target vehicle and the call content; and
a fourth fraud probability determined based on a character map of a caller corresponding to the insurance claiming call.

4. The method according to claim 2 or 3, further comprising:
determining, in response to determining that the composite fraud probability is less than a first threshold, a maintenance mode for the target vehicle based on the damage information.

5. The method according to claim 1, wherein performing data collection on the target vehicle to determine the damage information of the target vehicle comprises:
collecting image data of the target vehicle, and determining an accident type for the target vehicle based on the collected image data; and/or,
collecting video data of the target vehicle, and determining a damaged part and a damage type of the target vehicle based on a plurality of video frames in the video data.

6. The method according to claim 1, wherein determining the first fraud probability corresponding to the target vehicle at least based on the damage information and the accident-related information comprises:
extracting a first answer corresponding to a preset question in the call content from the damage information;
comparing the first answer with the accident-related information to determine a fifth fraud probability;
determining, in response to determining that the fifth fraud probability is less than a second threshold, the first fraud probability corresponding to the target vehicle based on the fifth fraud probability; or,
comparing, in response to determining that the fifth fraud probability is greater than or equal to the second threshold, the first answer with the call content to determine a sixth fraud probability, and determining the first fraud probability corresponding to the target vehicle based on the fifth fraud probability and the sixth fraud probability.

7. The method according to claim 3, wherein under the condition that the composite fraud probability is determined at least based on the second fraud probability, the second fraud probability is determined by:
determining a seventh fraud probability based on the geographic location information and a preset risk region;
extracting location information in the call content and comparing the location information in the call content with the geographic location information to determine an eighth fraud probability; and
determining the second fraud probability corresponding to the target vehicle based on the seventh fraud probability and the eighth fraud probability.

8. An apparatus for remote damage assessment of a vehicle, comprising:
a collecting module, configured to perform data collection on a target vehicle to determine damage information of the target vehicle;
an obtaining module, configured to obtain call content of an insurance claiming call for the target vehicle, and extract accident-related information from the call content, wherein the accident-related information comprises named entities in the call content and a relationship between the named entities; and
a first determining module, configured to determine a first fraud probability corresponding to the target vehicle at least based on the damage information and the accident-related information.

9. The apparatus according to claim 8, further comprising:
a second determining module, configured to determine a composite fraud probability configured to indicate whether an accident involves fraud based on the first fraud probability.

10. The apparatus according to claim 9, wherein the second determining module is further configured to:
determine the composite fraud probability based on the first fraud probability and at least one of:
a second fraud probability determined based on geographic location information of the target vehicle during insurance claiming;
a third fraud probability determined based on user information corresponding to the target vehicle and the call content; and
a fourth fraud probability determined based on a character map of a caller corresponding to the insurance claiming call.

11. The apparatus according to claim 9 or 10, further comprising:
a third determining module, configured to determine, in response to determining that the composite fraud probability is less than a first threshold, a maintenance mode for the target vehicle based on the damage information.

12. The apparatus according to claim 8, wherein the collecting module comprises:
a first determining unit, configured to collect image data of the target vehicle, and determine an accident type for the target vehicle based on the collected image data; and/or,
a second determining unit, configured to collect video data of the target vehicle, and determine a damaged part and a damage type of the target vehicle based on a plurality of video frames in the video data.

13. The apparatus according to claim 8, wherein the first determining module comprises:
an extracting unit, configured to extract a first answer corresponding to a preset question in the call content from the damage information;
a third determining unit, configured to compare the first answer with the accident-related information to determine a fifth fraud probability; and
a fourth determining unit, configured to determine, in response to determining that the fifth fraud probability is less than a second threshold, the first fraud probability corresponding to the target vehicle based on the fifth fraud probability; or,
a fifth determining unit, configured to compare, in response to determining that the fifth fraud probability is greater than or equal to the second threshold, the first answer with the call content to determine a sixth fraud probability, and determine the first fraud probability corresponding to the target vehicle based on the fifth fraud probability and the sixth fraud probability.

14. A non-transitory computer readable storage medium storing computer instructions, wherein the computer instructions, when executed by one or more processors, are configured to cause a computer to perform the method according to any one of claims 1-7.

15. A computer program product, comprising a computer program, wherein the computer program, when executed by a processor, implements the method according to any one of claims 1-7.
